(19) Europäisches Patentamt
European Patent Office
Office européen des brevets

(11) Publication number: **0 233 549 B1**

# (12) EUROPEAN PATENT SPECIFICATION

(45) Date of publication of patent specification: **27.03.91** (51) Int. Cl.$^5$: **H01M 8/06**

(21) Application number: **87101508.7**

(22) Date of filing: **04.02.87**

## (54) Method of starting fuel cell power generation system.

(30) Priority: **07.02.86 JP 23822/86**

(43) Date of publication of application:
**26.08.87 Bulletin 87/35**

(45) Publication of the grant of the patent:
**27.03.91 Bulletin 91/13**

(84) Designated Contracting States:
**DE FR GB NL**

(56) References cited:
**EP-A- 0 170 277**
**DE-A- 2 512 363**
**FR-A- 2 375 729**
**GB-A- 2 132 108**
**US-A- 4 041 210**

**PATENT ABSTRACTS OF JAPAN, vol. 6, no. 42 (E-98)[920], 16th March 1982; & JP-A-56 159 069 (HITACHI SEISAKUSHO K.K.) 08-12-1981**

**Idem**

(73) Proprietor: **HITACHI, LTD.**
**6, Kanda Surugadai 4-chome**
**Chiyoda-ku, Tokyo 100(JP)**

(72) Inventor: **Sugita, Shigehisa**
**10-33, Nishinarusawacho-1-chome**
**Hitachi-shi(JP)**
Inventor: **Koyama, Kazuhito Hitachi Narusawa Apartment 424**
**36-4-204, Nishinarusawacho-1-chome**
**Hitachi-shi(JP)**
Inventor: **Shiina, Koji**
**1-29, Shiraume-3-chome**
**Mito-shi(JP)**
Inventor: **Sakaguchi, Seiichiro**
**29-4, Mizukicho-2-chome**
**Hitachi-shi(JP)**
Inventor: **Kuroda, Michio**
**10-13, Higashinarusawacho-2-chome**
**Hitachi-shi(JP)**
Inventor: **Noguchi, Yoshiki**
**32-4, Nishinarusawacho-1-chome**
**Hitachi-shi(JP)**

**EP 0 233 549 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

PATENT ABSTRACTS OF JAPAN, vol. 10, no. 263 (E-435)[2319] 9th September 1986; & JP-A-61 88 460 (FUJI ELECTRIC CO. LTD) 06-05-1986

PATENT ABSTRACTS OF JAPAN, vol. 7, no. 65, (E-165)[1210], 18th March 1983; & JP-A-57 212 777 (KANSAI DENRIYOKU K.K.) 27-12-1982

PATENT ABSTRACTS OF JAPAN, vol. 10, no. 376 (E-464)[2433], 13th December 1986; & JP-A-61 168 876 (SANYO ELECTRIC CO. LTD) 30-07-1986

(74) Representative: **Patentanwälte Beetz sen. - Beetz jun. Timpe - Siegfried - Schmitt-Fumian**
**Steinsdorfstrasse 10**
**W-8000 München 22(DE)**

## Description

BACKGROUND OF THE INVENTION

This invention relates to a fuel cell power generation system. More particularly, it relates to a favorable method of starting said system in which fuel is used directly as a heating medium for raising the temperature of said system.

Only a few cases have hitherto been known in which any description is made regarding the method of starting a fuel cell power generation system. For example, in "Description of a Generic II-MW Fuel Cell Power Plant for Utility Applications" (EPRI EM-3161, Sept., 1983), which gives a typical example of investigation on a power generation system using a phosphoric acid type fuel cell, it is described regarding the start-up temperature elevation of a fuel reformer that "during start-up, the system is filled with nitrogen, and a start-up recycle compressor is operated such that nitrogen would be circulated through a reformer and a heating system operated by means of a starting torch provided at the upper part of the reformer"; as to the start-up temperature elevation of the fuel cell, it is shown that said temperature elevation is effected by providing a heater in a cell-cooling system which is used as such in normal operation, heating the coolant water by means of the heater, and circulating the heated water.

The reformer is divided into a reaction part and a heating part, and the reaction part is packed with a catalyst for reforming. Therefore, inflow of an oxygen-containing gas to the reaction part should be avoided because it would poison the property of the catalyst. Accordingly, it has been general practice to use nitrogen, an inert gas, as the heating medium.

However, when nitrogen is used as a heating medium in the prior method, it causes the increase of the consumption of nitrogen gas, and necessitates providing a nitrogen recycle system for start-up. Further, a process step is necessary to replace high-temperature nitrogen used in start-up with low-temperature fuel, which causes the increase of start-up time and necessitates a control system to suppress the pressure fluctuation in the fuel system.

Further, although the use of coolant water for raising the temperature of a fuel cell is practicable in a phosphoric acid type fuel cell, which operates at relatively low temperature (about 170° to 210°C), other method of temperature elevation is required for a molten carbonate type fuel cell, which can operate only at high temperature (about 400°C or above).

Patent Abstract of Japan, Vol. 6, No. 42 (E98) [920], March 16, 1982 discloses a method of starting a fuel cell for electric power wherein a hydrocarbon system fuel and steam are passed through a reforming reactor and a shift reactor to be converted into a mixture gas containing hydrogen, which is supplied to the fuel cell, air is also supplied to the fuel cell, water is supplied from a feed-water tank by means of a pump to make each equipment such as the reforming reactor to be driven, and wherein a device for burning part of the fuel, which is operated during the start of the plant so as to make the plant system to be preheated, is placed between the fuel source and the reactor, in order to increase the speed of the temperature rise of each system component.

GB-A-2 132 108 discloses a rapid starting methanol cracking system according to which a cracking reactor for use with a fuel cell vehicular power plant is started up by a combination of direct and indirect heating of the cracking catalyst. Reformable hydrocarbon is burned in a combustion chamber of the reactor; hot combustion gas travels in heat exchange relationship with the catalytic cracking chamber transferring heat across the catalyst chamber wall to heat the catalyst indirectly, and combustion gas is then diverted back through the catalyst bed to heat the catalyst directly. When the cracking reactor reaches operating temperature, hydrocarbon combustion is stopped and the reformable hydrocarbon is fed directly to the catalytic cracking reactor. Thereafter, the combustor may operate on excess hydrogen from the fuel cells.

SUMMARY OF THE INVENTION

The object of this invention is to provide a method of fuel cell power generation having a good starting characteristic in which auxiliary equipment and operation procedures necessary for start-up are simplified.

The above-mentioned problems can be solved when the cell is started by using fuel directly as a heating medium for elevating the temperature of the fuel cell power generation system. By using fuel directly as mentioned above, it is possible either to start a fuel reformer, a fuel cell, and a gas turbine each individually, or to start the whole power generation system comprising these constituents.

The above object is achieved, according to the present invention, by a method of starting a fuel cell power generation system provided with (a) a fuel reformer having a reforming part through which a heated

raw fuel is passed and a heating part which affords heat to said reforming part, wherein said reforming part is packed with reforming catalyst; (b) a fuel cell provided with an anode and a cathode in which a fuel containing hydrogen is fed to the anode and a gas containing oxygen is fed to the cathode to effect power generation; (c) pipe lines connecting an outlet of said reformer reforming part to said fuel cell anode; and (d) pipe lines connecting the outlet of said reformer reforming part and a turbine combustor; characterized in that at the time of starting said fuel cell power generation system, the heated raw fuel is introduced to said reformer reforming part and then is introduced through said pipe lines into said fuel cell anode and introduced through said pipe lines into said gas turbine combustor, thereby to raise the temperature of said reformer and said fuel cell.

According to this invention, since no inert gas is used in start-up, changeover from inert gas to fuel becomes unnecessary, and the temperature elevation and start-up of the system can be conducted in a short time. Further, in start-up temperature elevation of a fuel cell power generation system, the following conditions are required in general for the heating medium used for elevating the temperature of a fuel reformer and a fuel cell, which are principal apparatuses constituting the fuel cell power generation system. Thus, for the reaction part of a reformer, it is necessary (a) to prevent the poison of reforming catalyst due to oxygen and (b) to avoid carbon deposition. For a molten carbonate type fuel cell, there are required (a) prevention of anode corrosion due to oxygen, (b) avoiding carbon deposition and (c) the presence of $CO_2$ component, at a temperature higher than the molten temperature of electrolyte (about 400 °C), to prevent the transpiration of the electrolyte. According to this invention, the fuel used for the fuel cell power generation system can be employed as the heating medium such that the above conditions might be satisfied. Since the fuel contains no oxygen, it is effective in preventing the poison of reforming catalyst and preventing the corrosion of anode. Further, above the temperatures at which carbon deposition reaction takes place, carbon deposition can be prevented by mixing steam with the fuel. Furthermore, above the temperatures at which the transpiration of fuel cell electrolyte becomes a problem, it is possible to prevent the transpiration of electrolyte by mixing $CO_2$ with the fuel.

According to this invention, a fuel cell power generation system can be provided which has a good starting characteristic and in which auxiliary equipment and operational procedures necessary for start-up are simplified.

## BRIEF DESCRIPTION OF THE DRAWING

Fig. I shows a flow diagram of a molten carbonate type fuel cell.

Fig. 2 is a block diagram showing the operational procedures for principal apparatuses in starting a molten carbonate type fuel cell.

Fig. 3 is a chart showing the operational procedures in starting a molten carbonate type fuel cell and an example of the operation of respective valves.

## DESCRIPTION OF THE PREFERRED EMBODIMENT(S)

This invention will be explained below by way of some embodiments thereof and with reference to Drawings.

Fig. I shows an embodiment of this invention as applied to a molten carbonate type fuel cell. Description will be made hereinbelow with reference to Fig. I.

The principal apparatuses constituting a molten carbonate type fuel cell power plant include a fuel reformer I0I, a molten carbonate type fuel cell I02, an air compressor II6, a turbine II8, and a waste heat boiler I20.

The fuel reformer I0I is composed of a fuel reforming part II3 and a combustion heating part II2 partitioned from the former with a wall. The fuel reforming part is packed with reforming catalyst. The inlet of the fuel reforming part is connected, though not shown in Fig. I, to a fuel feeding part, and is provided with a control valve x I2I. The outlet is connected, through a control valve b I22, to the anode I03 of the molten carbonate type fuel cell I02. The molten carbonate type fuel cell I02 comprises an anode I03, a cathode I04, and a carbonate electrolyte interposed between the two; a passage of fuel is provided on the anode I03 side and a passage of air on the cathode I04 side. The anode outlet is connected to a heat exchanger I05, and the outlet of the heat exchanger is connected to a knockout drum I06. Two lines of outlet are provided for the knockout drum, one being connected to a water tank I07 and the other to an anode blower II0. The anode blower II0 is connected with a motor III and its outlet is connected, through the

above-mentioned heat exchanger 105, to the combustion heating part 112 of the reformer 101 mentioned above.

The combustion heating part 112 is also connected, through a control valve j127, to a compressor 116.

The air compressor 116, turbine 118 and generator 119 are connected with the same power system and, though not shown in the Figure, the power system is further connected, through a clutch, with a drive assembly. The outlet of the compressor 116 is connected, through a control valve f125, to the cathode 104 of the fuel cell 102 mentioned above. The cathode outlet divides in two directions, one being connected, through a cathode blower 114 connected with a motor 115, to the cathode inlet and the other being connected to the passage between the compressor 116 and the turbine 118. Between the compressor 116 and the turbine 118 are provided a control valve i126 and a combustor 117. The combustor 117 is further connected through a control valve a123 to the outlet of the reforming part 113 of the reformer 101.

The combustion heating part 112 of the reformer 101 is connected to the inlet part of the cathode 104 of the fuel cell 102 mentioned above.

At the outlet of the turbine 118 is provided a waste heat boiler 120. The turbine outlet and the waste heat boiler inlet are connected to each other, and the waste heat boiler outlet is connected, though not shown here, to a flue gas treating equipment.

The water tank 107 is connected, through a water treatment equipment 108 and a water feed pump 109, to the waste heat boiler 120. The waste heat boiler is further connected to the inlet part of the reformer 101 through a control valve c124.

The working of each equipment under rated operation conditions is described below.

Examples of fuel which may be used in fuel cells include natural gas, LPG, methanol, and gas oil. Although this invention can be applied to any of the fuels mentioned above, description will be made herein with reference to natural gas, which is representative of these fuels, by way of example.

Natural gas is supplied from a fuel feed equipment to the reforming part 113 of the reformer 101 via a control valve x121. Steam necessary for reforming reaction is mixed with natural gas before the natural gas enters the reforming part. In the reformer 101, the reforming reaction catalyzed by the catalyst present in the reforming part 113 takes place with the aid of heat generated in the combustion heating part 112. The reforming reaction of $CH_4$, the principal component of natural gas, is generally expressed as follows.

$$CH_4 + H_2O \rightleftarrows 3H_2 + CO$$

$$CO + H_2O \rightleftarrows H_2 + CO_2$$

The composition of gas after reforming depends on reforming temperature. As to the relationship between reforming temperature and gas composition, as disclosed for example in "New Energies and Future Power Generation Technology", Electrical Calculation (Denki Keisan), Special Number (Vol. 49, No. 8, p374, 1981-5), the concentration of hydrogen and carbon monoxide are high at high reforming temperatures and the concentration of methane and carbon dioxide are high at low reforming temperatures. A practically useful reforming reaction becomes active above the temperature at which the reforming catalyst becomes active; generally a reforming temperature of about 800°C is adopted.

The fuel gas which has come to comprise $H_2$, CO, $H_2O$, $CO_2$, $CH_4$ and other components after reforming enters, through the control valve b122, the anode 103 of the molten carbonate type fuel cell 102. A molten carbonate type fuel cell uses carbonate as electrolyte. Examples of the carbonate are $Li_2CO_3$, $Na_2CO_3$, $K_2CO_3$ and the like. These salts are solid at ordinary temperature and assume a molten state at the time of operation of the cell. Although the molten temperature of carbonates varies depending on the composition of the carbonates, it is generally about 400°C or above, as shown in "Review on Fuel Cell Power Generation Technology", Technical Report of Society of Electricity (Japan) (Denki Gakkai Gijutsu Hokoku) Part II, Fig. 141, p.50 (Dec., 1982). Below said temperature, carbonates are solid, show no ionic conductivity, and cannot work as a fuel cell component.

Generally, a temperature of about 650°C is selected as the working temperature of a molten carbonate type fuel cell. This is because, though the efficiency of the cell is higher as the temperature is higher, the life of fuel cell becomes short at temperatures exceeding an upper limit of about 650°C owing to the transpiration of electrolyte and other factors.

In the cell, the following reactions take place among hydrogen of the anode 103 side, oxygen of the

cathode l04 side, and carbon dioxide.

Cathode

$\frac{1}{2}O_2 + CO_2 + 2e \rightarrow CO_3^{2-}$

Anode

$H_2 + CO_3^{2-} \rightarrow H_2O + CO_2 + 2e$

Thus, the migration of carbonate ion $CO_3^{2-}$ takes place in the electrolyte, and carbon dioxide must be replenished, beside oxygen, on the cathode l04 side. Further, not all of the fuel is consumed in the cell. This is to prevent the lowering of efficiency due to decrease of average partial pressure of fuel and to use the remaining fuel as the fuel for the combustion heating part ll2 of the reformer l0l. The reaction in the fuel cell is exothermic unlike that in the reformer, and hence the temperature of fuel gas at the anode outlet becomes high. In the embodiment shown in Fig. l, steam required in reforming is separated from the anode outlet. Resultantly, the concentrations of remaining gas components are high, combustion at the reformer combustion heating part ll2 is improved, and further the concentration of oxygen and carbon dioxide at the cathode l04 can be increased, leading to an enhanced cell efficiency.

To separate water from the anode outlet gas, the temperature of the anode l03 outlet gas is decreased by means of the heat exchanger l05, and further lowered in the knockout drum l06, whereby the moisture in the gas is decreased to that corresponding to the vapor pressure at the temperature and water is separated. The separated water enters the water tank l07, and the anode outlet gas after the separation is brought to elevated pressure by means of the anode blower ll0 driven by the motor lll, then introduced into the above-mentioned heat exchanger l05, where it cools the gas which has just left the anode l03 outlet, while it increases its own temperature.

The outlet gas from the heat exchanger l05 is introduced into the combustion heating part ll2 of the reformer l0l, combusted with air brought to elevated pressure by means of the compressor ll6 and delivered through the control valve jl27. The heat of combustion is transferred to the reforming part ll3, affording heat to reforming reaction. The combustion gas from the combustion heating part ll2 is sent to the cathode l04 inlet part and mixed with air delivered from the air compressor ll6.

The air compressor ll6 raises the pressure of air, and sends a part of the air to the combustion heating part ll2 of the reformer l0l mentioned above. The remainder of the air is sent to the cathode l04 of the molten carbonate type fuel cell l02 through the control valve fl25. In the cathode l04, oxygen and carbon dioxide are consumed through electrochemical reaction. Part of the cathode l04 outlet gas, whose temperature has been raised owing to the exothermic reaction occurring in the cell, is recycled to the cathode l04 inlet part by means of the cathode blower ll4 driven by the motor ll5. The purpose of recycling is to decrease the temperature difference in the cathode, thereby to decrease the development of thermal stress, and to increase the cathode inlet temperature to prevent the coagulation of molten carbonate, and further to improve the utilization factor of oxygen and carbon dioxide. The remainder of the cathode outlet gas enters the passage between the air compressor ll6 and the turbine ll8. In this embodiment, a control valve il26 and a combustor ll7 are provided at the outlet of the compressor ll6. The above-mentioned cathode outlet gas enters between the control valve il26 and the combustor ll7, then enters the turbine ll8 via the combustor ll7 to do its work. Under rated operation conditions, the control valve il26 and the control valve al23 are either totally closed so as to stop the flow of air and fuel to the combustor ll7 completely, or opened very slightly to maintain only the combustion of the pilot burner in the combustor.

The air compressor ll6 and the generator ll9 are driven by means of the turbine ll8. The exhaust gas from the turbine outlet is introduced into the waste heat boiler l20.

Water stored in the water tank l07 is treated in the water treatment equipment l08, then brought to elevated pressure and sent to the waste heat boiler l20 by means of the feed water pump l09. Steam is produced from the water in the waste heat boiler l20, and sent to the reforming part ll3 inlet of the reformer l0l via the control valve cl24.

The operation procedures in start-up according to this invention will be described below by way of the embodiment shown in Fig. l.

In start-up, generally an inert gas is filled in the reformer reforming part ll3 and the fuel cell l02. All the control valves shown in Fig. l are closed.

First, the drive assembly is started by opening the control valve il26 provided between the compressor ll6 and the combustor ll7, to run the compressor ll6, turbine ll8 and generator ll9. Air is sent to the combustor ll7 by the compressor ll6 running. Then, the control valves xl2l and al23 of the fuel feed system are gradually opened, and the combustor is started by means of an ignition device provided in the combustor ll7. When the compressor ll6, turbine ll8 and generator ll9 system attain a set value of rotating speed respectively, the clutch connecting the system with the drive assembly is let out and self-sustaining operation is conducted. When the amount of fuel is further increased at the time when the rated rotating

speed has been reached, the generator l20 can begin power generation.

During the period, the fuel is fed through the reforming part l03 of the reformer l0l. However, since the reforming part is at the feed fuel temperature (generally ordinary temperature), the catalyst is inactive and carbon deposition reaction does not take place.

By operation of the compressor ll6, combustor ll7, turbine ll8 and generator ll9 system, a high-temperature combustion exhaust gas is fed from the turbine ll8 outlet to the waste heat boiler l20. On the other hand, water in the tank l07 is fed through the water treatment equipment l08 to the waste heat boiler l20 by means of the feed water pump l09. Steam generated in the waste heat boiler l20 is passed through the control valve cl24 and is mixed with fuel at the reforming part ll3 outlet of the reformer l0l. By means of this steam-mixing, the fuel can be passed through the reforming part under conditions at which carbon deposition does not take place, and the reforming part is brought to elevated temperature by the steam, and thus becomes ready for reforming.

Then, the control valve bl22 at the anode l03 inlet and the control valve fl25 at the cathode l04 inlet are gradually opened to introduce fuel and steam into the anode l03, and air into the cathode l04, whereby the temperature of the cell is increased. Simultaneous inflow to the anode l03 and the cathode l04 facilitates the control of differential pressure between the anode and the cathode. At the same time, the control valve jl27 at the compressor outlet is also gradually opened in order to send air to the combustion part ll2 of the reformer l0l.

At the time when the fuel passed through the anode l03 and the air from the compressor ll6 have reached the combustion heating part ll2 of the reformer l0l, combustion at the combustion heating part ll2 is initiated. For the sake of safety, it is desirable that the combustion part of the reformer be fed with air in advance, and a flare system and a purge system be provided to be used in the event of flame-out.

By combustion at the combustion heating part ll2 of the reformer l0l, the temperature of the reformer is elevated and, at the same time, fuel gas of elevated temperature is fed to the anode l03, thereby to increase the temperature of the fuel cell. High-temperature fuel gas discharged from the combustion part is mixed with air passed through the control valve fl26, and the mixture is fed to the cathode l04 to raise the temperature of the cathode. Part of the gas flowing out from the cathode l04 is recycled, but the remainder is mixed at the combustor ll7 inlet with air passed through the air compressor ll6, and fed to the combustor ll7.

If the temperature elevation in the reformer l0l and the molten carbonate type fuel cell l02 is scheduled such that the carbonate which is the electrolyte in the fuel cell l02 would begin melting after the reforming catalyst in the reforming part ll3 of the reformer l0l has reached the temperature at which the catalyst becomes active and can cause reforming reaction, then the anode l03 is fed with a fuel containing carbon dioxide produced by the reforming reaction and the cathode l04 is fed with a combustion gas containing carbon dioxide produced at the combustion heating part, whereby the above-mentioned transpiration of carbonates can be prevented.

When the electrolyte of the fuel cell l02 reaches a completely molten state, since the anode l03 is being fed with hydrogen, carbon monoxide, and carbon dioxide which have been produced by reforming and the cathode l04 is being fed with carbon dioxide produced at the combustion heating part ll2 of the reformer l0l and with oxygen delivered from the air compressor ll6, the cell becomes capable of generating power. Thus, heat generation takes place concurrently with power generation, and the cell raises its temperature by itself.

After the reformer and the fuel cell have reached the temperature of rated operation or that corresponding thereto, the fuel from the reformer l0l is throttled by means of the fuel control valve al23, and the air from the compressor ll6 by means of the air control valve il26, to stop the combustion in the combustor ll7 or to maintain a pilot flame alone.

The operational procedures for principal apparatuses in start-up are shown collectively in Fig. 2. Further, the operational procedures of Fig. 2 and an example of the operations of respective valves are shown in Fig. 3.

In stoppage, approximately reverse procedures to those in start-up are followed. The fuel control valve al23 at the reformer l0l outlet is opened to start feeding fuel to the combustor ll7 and to actuate the combustor ll7. At this time, if necessary, the air control valve il26 is opened to feed air to the combustor ll7. However, the amount of air passed through the control valve il26 is preferably restricted to the necessary minimum because the exhaust gas from the cathode l04 outlet also contains oxygen and the oxygen consumption in the cell decreases with the decrease of the load of the fuel cell, and because it is advantageous for promoting the cooling of the cell to send a larger amount of air to the cathode.

Concurrently with decreasing the load of the cell and with gradualling closing the fuel control valve bl22, air is sent in a large amount from the air control valve jl27 at the compressor ll6 outlet to the reformer

combustion heating part II2, to cool also the reformer I0I.

At the time when the temperature of the reformer I0I and the fuel cell I02 have decreased, the control valves bI22, fI25 and jI27 are completely closed, the control valve iI26 is opened, and air is fed to the combustor II7.

Cooling is preferably scheduled such that the reforming reaction in the reformer I0I would stop after coagulation of the molten carbonate in the fuel cell I02 has taken place because it is effective for preventing the evaporation of carbonates.

When the feed of fuel and air to the fuel cell I02 has come to a halt, the atmosphere in the cell anode I03 and the cathode I04 is replaced with inert gas.

In the last stage, at the time when fuel is fed to the combustor II7 through the reformer I0I, only the system of the compressor II6, combustor II7, turbine II8, generator II9, and waste heat boiler I20 is in operation, and the temperature of the reforming part II3 of the reformer I0I has been decreased to a point at which the reforming catalyst becomes inactive, the control valve cI24 is closed to stop the supply of steam from the waste heat boiler I20, and subsequently the control valves xI2I and aI23 are closed to stop also the system of the compressor II6, combustor II7, turbine II8 and generator II9.

Nextly, procedures followed in load cutoff from full load, one of the most abrupt change encountered in operation, will be described below. In load cutoff, it is required, owing to some trouble in the system of transmission and transformation, etc., to stop power generation immediately and at the same time to keep the plant in stand-by state.

An indispensable requisite in stand-by state is to maintain the temperature of the reformer I0I and the fuel cell I02. The reformer should be maintained at least at a temperature not lower than the temperature at which the catalyst becomes active, and the fuel cell should be maintained at a temperature not lower than the temperature at which the carbonate of electrolyte fuses. These conditions were already shown as the restrictions for start-up described above. The reformer reforming part inlet fuel should be mixed with steam to use it for reaction and to prevent carbon deposition, and the gas fed to the fuel cell should be mixed with carbon dioxide to prevent the transpiration of carbonate.

The signal for load cutoff enters the control valves shown in Fig. I, whereby the control valves xI2I, bI22, fI25, and jI27 begin to close rapidly, the control valves aI23 and iI26 open rapidly, the combustor II7 is actuated to feed the combustion gas from the combustor II7 to the turbine II8 in place of the cathode I04 exhaust gas.

At the final stage, a small amount of fuel is introduced into the reforming part II3 of the reformer I0I via the control valve xI2I to be reformed. Then, part of the reformed gas is fed to the anode I03 of the fuel cell I02 via the control valve bI22 and the remainder is fed to the combustor II7 via the control valve aI23 to be combusted. The flow rate of fuel passed through the control valve bI22 is selected so as to satisfy the amount necessary for reforming reaction at the reforming part II3 of the reformer I0I and for maintaining the temperature of the reformer I0I and the fuel cell I02. The flow rate of fuel passed through the control valve aI23 is selected such that the driving power of the turbine II8 might balance with the driving power for the compressor II8. At this time, if the temperature of exhaust gas at the waste heat boiler I20 inlet becomes lower than that required for steam generation, it is necessary to increase the fuel flow passing through the control valve aI23 and to effect supplementary heating at the waste heat boiler I20 inlet. Accordingly, an apparatus therefor should be provided.

Part of the air from the air compressor II6 is fed to the reformer combustion heating part II6 via the control valve jI27 only in the minimum amount necessary for the combustion of fuel passed through the anode I03. The remainder of the air is all introduced into the combustor II7 via the control valve iI26. Thus, the cathode I04 of the fuel cell I02 is fed only with combustion exhaust gas from the reformer combustion heating part II2 which contains carbon dioxide but little oxygen. The temperature of the fuel cell is maintained by the sensible heat of the gas and of the reformed fuel passed through the anode.

Further, since the waste heat boiler I20 is in operation, steam is supplied to the reformer reforming part II3 consecutively.

According to one embodiment of this invention, the following effect can be obtained. Thus, in the event of failure in the fuel cell section, the control valves bI22, fI25 and jI27 are closed to stop the supply of fuel and air to the fuel cell system, and the control valves aI23 and iI26 are opened to increase the load applied on the system of the compressor II6, combustor II7, turbine II8 and generator II8, whereby impairment of the function as a power generation plant is obviated.

## Claims

1. A method of starting a fuel cell power generation system provided with
   (a) a fuel reformer (101) having a reforming part (113) through which a heated raw fuel is passed and a heating part (112) which affords heat to said reforming part (113), wherein said reforming part (113) is packed with reforming catalyst;
   (b) a fuel cell (102) provided with an anode (103) and a cathode (104) in which a fuel containing hydrogen is fed to the anode (103) and a gas containing oxygen is fed to the cathode (104) to effect power generation;
   (c) pipe lines connecting an outlet of said reformer reforming part (113) to said fuel cell anode (103); and
   (d) pipe lines connecting the outlet of said reformer reforming part (113) and a turbine combustor (117);
   **characterized in that**
   at the time of starting said fuel cell power generation system, the heated raw fuel is introduced to said reformer reforming part (113) and then is introduced through said pipe lines into said fuel cell anode (103) and introduced through said pipe lines into said gas turbine combustor (117), thereby to raise the temperature of said reformer (101) and said fuel cell (102).

2. A method of starting a fuel cell power generation system according to claim 1, wherein the temperature of said reformer (101) and said fuel cell (102) is raised prior to heating said raw fuel by heating said reformer reforming part (113) using said reformer heating part (112).

3. A method according to claim 1, wherein said raw fuel is combusted in said heating part (112) to heat said reforming part (113), said raw fuel which has passed through said reforming part (113) is introduced into the anode (103) of the fuel cell (102), exhaust gas produced by combustion in said heating part (112) is fed to the cathode (104) of the fuel cell (102), and said raw fuel is ignited at said heating part (112) only when said reforming part (113) has been filled with said heated raw fuel.

4. A method of starting a fuel cell power generation system according to claim 3, wherein the temperature of said reformer reforming part (113) and said fuel cell (102) are raised prior to igniting said raw fuel at said reformer heating part (112).

5. A method according to claim 3 or 4, wherein said heated raw fuel is fed as a mixture with steam through an inlet of said reforming part (113), and said raw fuel is ignited at said heating part (112) only when said reforming part (113) has been filled with said mixture of steam and heated raw fuel.

6. A method according to claim 3 or 4, wherein said raw fuel which has passed through said anode (103) is fed to said heating part (112).

7. A method of starting a fuel cell power generation system, comprising:
   a first stage including the steps of filling a reforming part (113) of a reformer (101) with inert gas; and filling a fuel cell (102) with inert gas, wherein said reformer (101) and said fuel cell (102) are connected by a pipe line;
   a second stage including the steps of starting a drive assembly comprising a compressor (116), a combustor (117), a turbine (118) and a generator (119) by feeding air from said compressor (116) to said combustor (117), feeding fuel to said reformer reforming part (113) and from said reformer reforming part (113) to said combustor (117); and engaging a clutch of said drive assembly when said compressor (116), said turbine (118) and said generator (119) have attained a predetermined rotating speed;
   a third stage including the steps of feeding a high-temperature combustion exhaust gas produced by said drive assembly to a waste heat boiler (120); feeding water to said waste heat boiler (120); generating steam in said waste heat boiler (120), and feeding steam generated in said waste heat boiler (120) to said reformer reforming part (113) where it is mixed with fuel fed to said reformer reforming part (113);
   a fourth stage including the steps of feeding fuel and steam from said reformer reforming part (113) to an anode (103) of said fuel cell (102); feeding air to a cathode (104) of said fuel cell (102); and feeding air from said compressor (116) to a reformer combustion part (112);
   a fifth stage including the steps of elevating the temperature of said anode (103) by elevating the

temperature of said fuel and steam fed to said anode (103) from said reformer reforming part (113), by in turn elevating the temperature of said reformer reforming part (113) by combusting said air fed to said reformer combustion part (112) from said compressor (116); elevating the temperature of said cathode (104) by feeding a high-temperature combustion gas to said cathode (104) from said reformer combustion part and by feeding air to said cathode (104) from said compressor (116) of said drive assembly; recycling a portion of gas exiting said cathode (104); and feeding a remainder of gas exiting said cathode (104) to said combustor (117) of said drive assembly, and
a sixth stage including the steps of attaining an operational temperature in said reformer (101) and said fuel cell (102); reducing said feed of fuel from said reformer reforming part (113) to said combustor (117) of said drive assembly; reducing said feed of air from said compressor (116) to said combustor (117) of said drive assembly; and stopping combustion in said combustor (117) of said drive assembly.

**8.** A method according to anyone of the preceding claims, wherein said raw fuel is natural gas, LPG, methanol or gas oil.

**Revendications**

**1.** Procédé pour faire démarrer un système de production d'énergie à pile à combustible, comportant
(a) un reformeur de combustible (101) possédant une partie de reformage (113), que traverse un combustible brut chauffé, et une partie de chauffage (112), qui applique une chaleur à ladite partie de reformage (113), ladite partie de reformage (113) étant remplie d'un catalyseur de reformage;
(b) une pile à combustible (102) comportant une anode (103) et une cathode (104) et dans laquelle un combustible contenant de l'hydrogène est envoyé à l'anode (103), et un gaz contenant de l'oxygène est envoyé à la cathode (104) pour réaliser la production d'énergie;
(c) des canalisations raccordant une sortie de ladite partie de reformage (113) du reformeur à ladite anode (103) de la pile à combustible; et
(d) des canalisations raccordant la sortie de ladite partie de reformage (113) du reformeur et une chambre de combustion (117) d'une turbine; caractérisé en ce que
au moment du démarrage dudit système de production d'énergie à pile à combustible, le combustible brut chauffé est introduit dans ladite partie de reformage (113) du reformeur, puis est introduit, par l'intermédiaire desdites canalisations, dans ladite anode (103) de la pile à combustible et est introduit, par l'intermédiaire desdites canalisations, dans ladite chambre de combustion (117) de la turbine à gaz, ce qui accroit la température dudit reformeur (101) et de ladite pile à combustible (102).

**2.** Procédé pour faire démarrer un système de production d'énergie à pile à combustible selon la revendication 1, selon lequel on augmente la température dudit reformeur (101) et de ladite pile à combustible (102) avant de chauffer ledit combustible brut en chauffant ladite partie de reformage (113) du reformeur moyennant l'utilisation de ladite partie de chauffage (112) du reformeur.

**3.** Procédé selon la revendication 1, selon lequel ledit combustible brut est brûlé dans ladite partie de chauffage (112) de manière à chauffer ladite partie de reformage (113), ledit combustible brut, qui a traversé ladite partie de reformage (113), est introduit dans l'anode (103) de la pile à combustible (102), le gaz d'échappement produit par la combustion réalisée dans ladite partie de chauffage (112) est envoyé à la cathode (104) de la pile à combustible (102), et ledit combustible brut est enflammé dans ladite partie de chauffage (112) uniquement lorsque ladite partie de reformage (113) a été remplie par ledit combustible brut chauffé.

**4.** Procédé pour faire démarrer un système de production d'énergie à pile à combustible selon la revendication 3, selon lequel on augmente la température de ladite partie de reformage (113) du reformeur et de ladite pile à combustible (102) avant l'inflammation dudit combustible brut dans ladite partie de chauffage (112) du reformeur.

**5.** Procédé selon la revendication 3 ou 4, selon lequel ledit combustible brut chauffé est envoyé, en mélange avec de la vapeur, à une entrée de ladite partie de reformage (113), et ledit combustible brut est enflammé dans ladite partie de chauffage (112) uniquement lorsque ladite partie de reformage (113)

a été remplie par ledit mélange formé par la vapeur et le combustible brut chauffé.

6. Procédé selon la revendication 3 ou 4, selon lequel ledit combustible brut, qui a traversé ladite anode (103), est envoyé à ladite partie de chauffage (112).

7. Procédé pour faire démarrer un système de production d'énergie à pile à combustible, incluant :
une première étape incluant les pas consistant à remplir une partie de reformage (113) d'un reformeur (101) avec un gaz inerte, et à remplir une pile à combustible (102) avec un gaz inerte, ledit reformeur (101) et ladite pile à combustible (102) étant raccordés par une canalisation;
une seconde étape incluant les pas consistant à faire démarrer une unité d'entraînement incluant un compresseur (116), une chambre de combustion (117), une turbine (118) et une génératrice (119) par envoi d'air dudit compresseur (116) à ladite chambre de combustion (117), envoi de combustible à ladite partie de reformage (113) du reformeur et à partir de ladite partie de reformage (113) du reformeur à ladite chambre de combustion (117); et à enclencher un embrayage de ladite unité d'entraînement lorsque ledit compresseur (116), ladite turbine (118) et ladite génératrice (119) ont atteint une vitesse de rotation prédéterminée;
une troisième étape incluant les pas consistant à envoyer un gaz d'échappement de combustion à haute température produit par ladite unité d'entraînement à une chaudière à récupération de chaleur (120); envoyer de l'eau à ladite chaudière à récupération de chaleur (120); produire de la vapeur dans ladite chaudière à récupération de chaleur (120) et envoyer la vapeur produite dans ladite chaudière à récupération de chaleur (120) à ladite partie de reformage (113) du reformeur, dans laquelle elle est mélangée au combustible envoyé à ladite partie de reformage (113) du reformeur;
une quatrième étape incluant les pas consistant à envoyer du combustible et de la vapeur à partir de ladite partie de reformage (113) du reformeur à une anode (103) de ladite pile à combustible (102); envoyer de l'air à une cathode (104) de ladite pile à combustible (102); et envoyer de l'air depuis ledit compresseur (116) à une partie de combustion (112) du reformeur;
une cinquième étape incluant les pas consistant à accroître la température de ladite anode (103) en augmentant la température dudit combustible et de ladite vapeur envoyés à ladite anode (103) à partir de la partie de reformage (113) du reformeur, en augmentant à son tour la température de ladite partie de reformage (113) du reformeur au moyen de la combustion dudit air envoyé à ladite partie de combustion (112) du reformeur à partir dudit compresseur (116); accroître la température de ladite cathode (104) en envoyant un gaz de combustion à haute température à ladite cathode (104) à partir de ladite partie de combustion du reformeur et en envoyant de l'air à ladite cathode (104) à partir dudit compresseur (116) de ladite unité d'entraînement; recycler une partie du gaz sortant de ladite cathode (104); et envoyer un reste du gaz sortant de ladite cathode (104) à ladite chambre de combustion (117) de ladite unité d'entraînement; et
une sixième étape incluant les pas consistant à atteindre une température de fonctionnement dans ledit reformeur (101) et dans ladite pile à combustible (102); réduire ledit envoi de carburant à partir de ladite partie de reformage (113) du reformeur à ladite chambre de combustion (117) de ladite unité d'entraînement; réduire ledit envoi d'air à partir dudit compresseur (116) à ladite chambre de combustion (117) de ladite unité d'entraînement; et arrêter la combustion dans ladite chambre de combustion (117) de ladite unité d'entraînement.

8. Procédé selon l'une quelconque des revendications précédentes, selon lequel ledit combustible brut est du gaz naturel, du gaz de pétrole liquéfié, du méthanol ou du gazole.

## Ansprüche

1. Verfahren zum Starten eines Brennstoffzellensystems zur Stromerzeugung mit
(a) einer Brennstoffreformiereinrichtung (101) mit einem Reformierteil (113), durch den ein erhitzter Rohbrennstoff geleitet wird, und einem Heizteil (112), der Wärme auf den Reformierteil (113) überträgt, wobei der Reformierteil (113) mit einem Reformierkatalysator gepackt ist;
(b) einer mit einer Anode (103) und einer Kathode (104) versehenen Brennstoffzelle (102), der an der Anode (103) Brennstoff enthaltender Wasserstoff und an der Kathode (104) ein Gas enthaltender Sauerstoff zugeführt wird, um eine Stromerzeugung zu bewirken;
(c) Rohrleitungen, die den Auslaß des Reformierteils (113) mit der Anode (103) der Brennstoffzelle verbinden; und

(d) Rohrleitungen, die den Auslaß des Reformierteils (113) mit dem Brenner (117) einer Turbine verbinden;
dadurch **gekennzeichnet,** daß
zum Zeitpunkt des Startens des Brennstoffzellensystems zur Stromerzeugung der erhitzte Rohbrennstoff in den Reformierteil (113) und dann durch die entsprechenden Rohrleitungen in die Anode (103) der Brennstoffzelle und durch die entsprechenden Rohrleitungen in den Brenner (117) der Gasturbine geleitet wird, wobei die Temperatur der Reformiereinrichtung (101) und der Brennstoffzelle (102) erhöht wird.

2. Verfahren zum Starten eines Brennstoffzellensystems zur Stromerzeugung nach Anspruch 1, wobei die Temperatur der Reformiereinrichtung (101) und der Brennstoffzelle (102) vor dem Erhitzen des Rohbrennstoffs durch Erhitzen des Reformierteils (113) durch den Heizteil (112) erhöht wird.

3. Verfahren nach Anspruch 1, wobei der Rohbrennstoff im Heizteil (112) zur Erhitzung des Reformierteils (113) verbrannt wird, der Rohbrennstoff, der durch den Reformierteil (113) geleitet wurde, in die Anode (103) der Brennstoffzelle (102) eingeführt wird, das durch Verbrennung im Heizteil (112) erzeugte Abgas zur Kathode (104) der Brennstoffzelle (102) geleitet wird und der Rohbrennstoff am Heizteil (112) nur dann gezündet wird, wenn der Reformierteil (113) mit dem erhitzten Rohbrennstoff gefüllt ist.

4. Verfahren zum Starten eines Brennstoffzellensystems zur Stromerzeugung nach Anspruch 3, wobei die Temperatur des Reformierteils (113) und der Brennstoffzelle (102) vor dem Zünden des Rohbrennstoffs am Heizteil (112) erhöht wird.

5. Verfahren nach Anspruch 3 oder 4, wobei der erhitzte Rohbrennstoff als Mischung mit Dampf durch einen Einlaß des Reformierteils (113) geleitet und der Rohbrennstoff am Heizteil (112) nur gezündet wird, wenn der Reformierteil (113) mit der Mischung von Dampf und erhitztem Rohbrennstoff gefüllt ist.

6. Verfahren nach Anspruch 3 oder 4, wobei der durch die Anode (103) geleitete Rohbrennstoff dem Heizteil (112) zugeführt wird.

7. Verfahren zum Starten eines Brennstoffzellensystems zur Stromerzeugung, das folgende Stufen umfaßt:
Eine erste Stufe mit den Schritten des Füllens eines Reformierteils (113) einer Reformiereinrichtung (101) sowie einer Brennstoffzelle (102) mit Inertgas, wobei die Reformiereinrichtung (101) und die Brennstoffzelle (102) durch eine Rohrleitung verbunden sind;
eine zweite Stufe mit den Schritten des Startens eines Antriebsaufbaus mit einem Kompressor (116), einem Brenner (117), einer Turbine (118) und einem Generator (119), durch Zuführen von Luft vom Kompressor (116) zum Brenner (117), des Zuführens von Brennstoff zum Reformierteil (113) und vom Reformierteil (113) zum Brenner (117) und der Betätigung einer Kupplung des Antriebsaufbaus, wenn der Kompressor (116), die Turbine (118) und der Generator (119) eine vorbestimmte Drehzahl erreicht haben;
eine dritte Stufe mit den Schritten des Zuführens eines durch den Antriebsaufbau erzeugten Hochtemperatur-Verbrennungsabgases zu einem Abhitzekessel (120), des Zuführens von Wasser zu dem Abhitzekessel (120), des Erzeugens von Dampf im Abhitzekessel (120) und des Zuführens von Dampf, der in dem Abhitzekessel (120) erzeugt wird, zum Reformierteil (113), wo er mit zum Reformierteil (113) geleitetem Brennstoff vermischt wird;
eine vierte Stufe mit den Schritten des Zuführens von Brennstoff und Dampf vom Reformierteil (113) zu einer Anode (103) der Brennstoffzelle (102), des Zuführens von Luft zu einer Kathode (104) der Brennstoffzelle (102), und des Zuführens von Luft vom Kompressor (116) zum Verbrennungsteil (112) der Reformiereinrichtung;
eine fünfte Stufe mit den Schritten des Anhebens der Temperatur der Anode (103) durch Anheben der Temperatur des Brennstoffs und des Dampfes, der der Anode (103) vom Reformierteil (113) zugeführt wird, des weiteren des Anhebens der Temperatur des Reformierteils (113) durch Verbrennung der dem Verbrennungsteil (112) der Reformiereinrichtung vom Kompressor (116) zugeführten Luft, des Anhebens der Temperatur der Kathode (104) durch Zuführen eines Hochtemperatur-Verbrennungsgases vom Verbrennungsteil der Reformiereinrichtung zur Kathode (104) und Zuführen von Luft vom Kompressor (116) des Antriebsaufbaus zur Kathode (104), der Rückführung eines Teils des aus der Kathode (104) austretenden Gases, und der Zuführung des restlichen aus der Kathode (104) austretenden Gases zum Brenner (117) des Antriebsaufbaus, und

eine sechste Stufe mit den Schritten des Erreichens einer Arbeitstemperatur in der Reformiereinrichtung (101) und der Brennstoffzelle (102), der Verminderung der Zufuhr von Brennstoff vom Reformierteil (113) zum Brenner (117) des Antriebsaufbaus, der Verminderung der Luftzufuhr zum Brenner (117) des Antriebsaufbaus vom Kompressor (116), und des Stoppens der Verbrennung in dem Brenner (117) des Antriebsaufbaus.

**8.** Verfahren nach einem der vorangehenden Ansprüche, wobei der Rohbrennstoff Erdgas, LPG, Methanol oder Gasöl ist.

FIG. 1

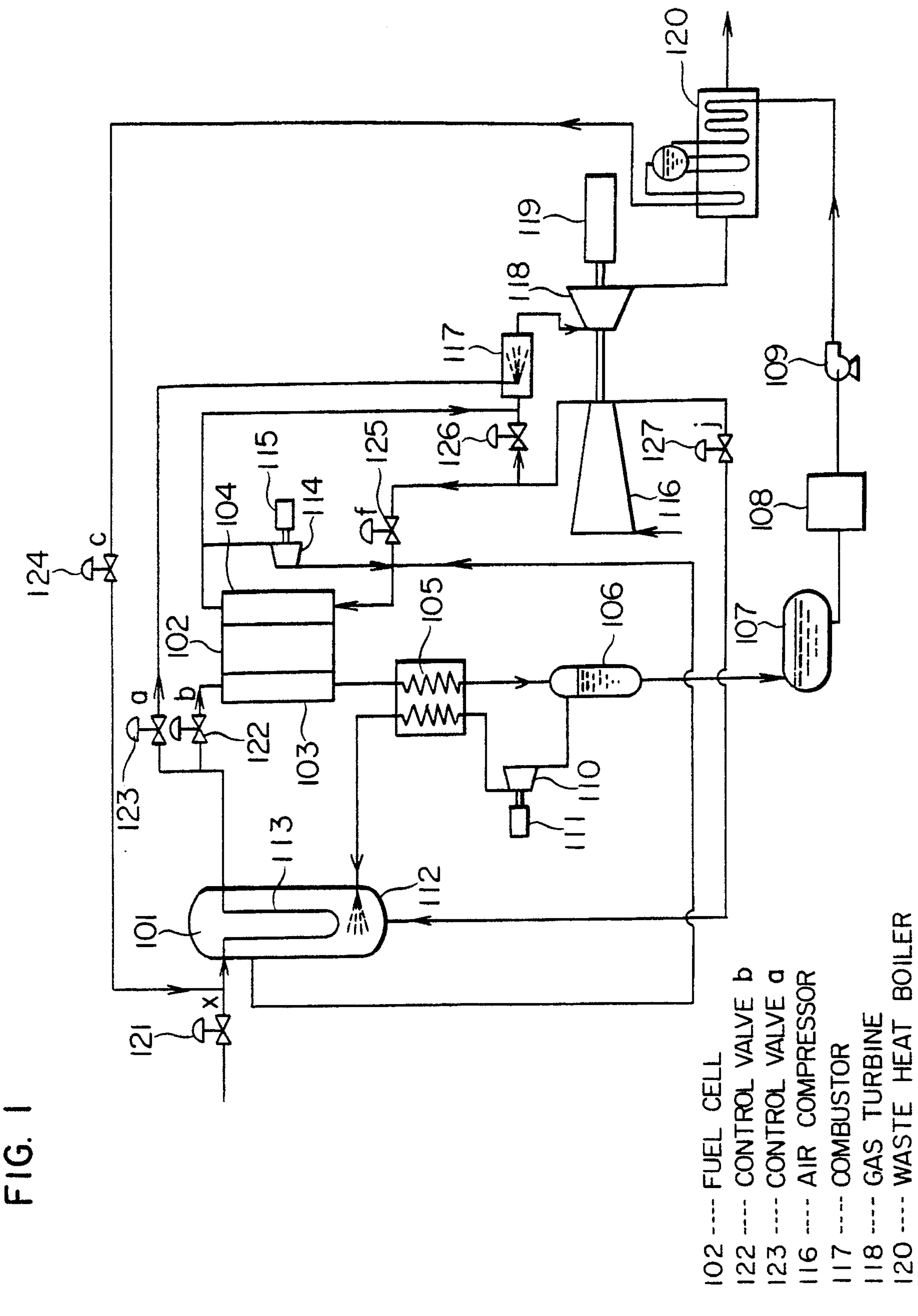
101
102
103
104
105
106
107
108
109
110
111
112
113
114
115
116
117
118
119
120
121
122
123
124
125
126
127
a
b
c
f
j
x
102 ---- FUEL CELL
122 ---- CONTROL VALVE b
123 ---- CONTROL VALVE a
116 ---- AIR COMPRESSOR
117 ---- COMBUSTOR
118 ---- GAS TURBINE
120 ---- WASTE HEAT BOILER

FIG. 2

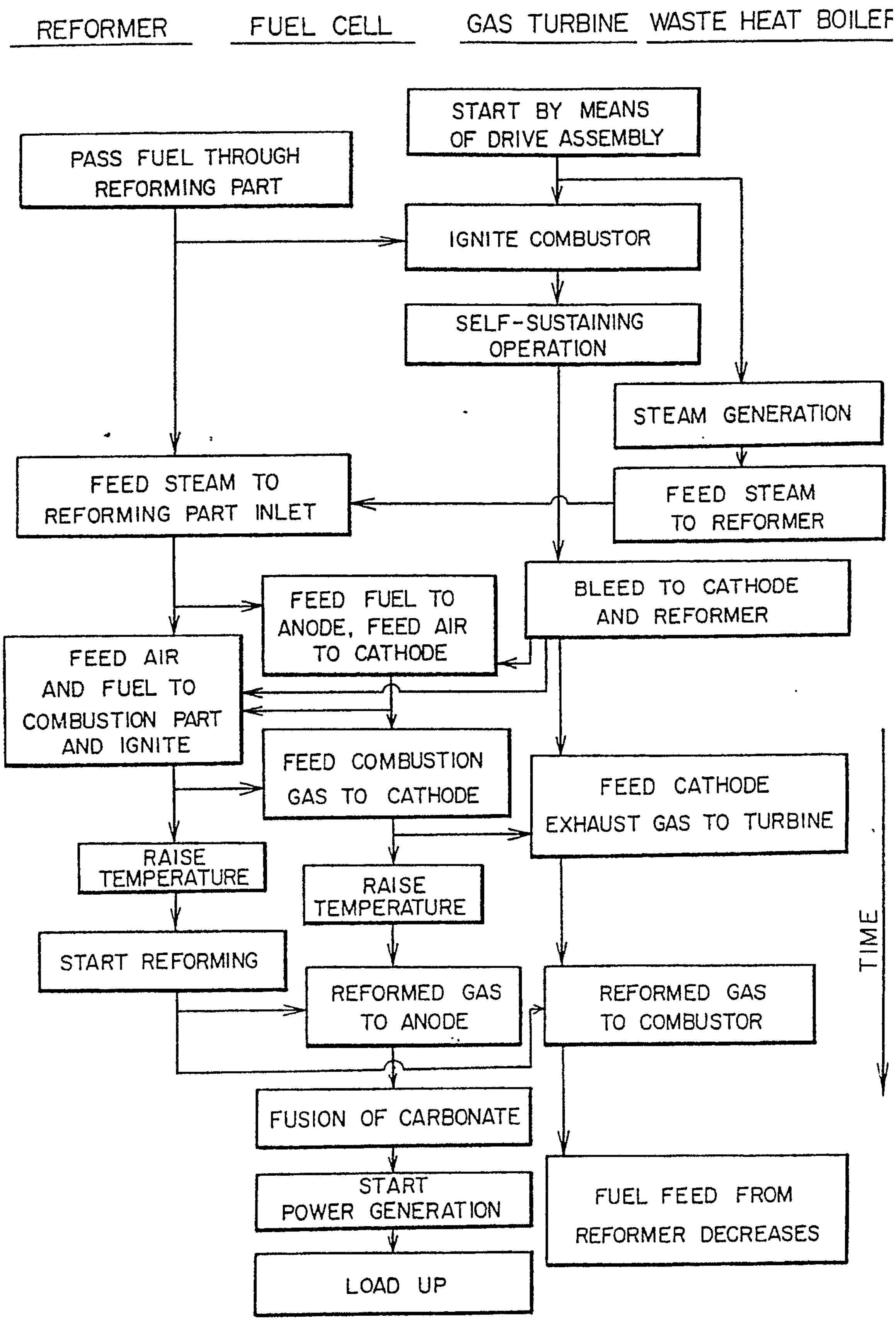
REFORMER
FUEL CELL
GAS TURBINE
WASTE HEAT BOILER
START BY MEANS OF DRIVE ASSEMBLY
PASS FUEL THROUGH REFORMING PART
IGNITE COMBUSTOR
SELF-SUSTAINING OPERATION
STEAM GENERATION
FEED STEAM TO REFORMING PART INLET
FEED STEAM TO REFORMER
FEED FUEL TO ANODE, FEED AIR TO CATHODE
BLEED TO CATHODE AND REFORMER
FEED AIR AND FUEL TO COMBUSTION PART AND IGNITE
FEED COMBUSTION GAS TO CATHODE
FEED CATHODE EXHAUST GAS TO TURBINE
RAISE TEMPERATURE
RAISE TEMPERATURE
START REFORMING
REFORMED GAS TO ANODE
REFORMED GAS TO COMBUSTOR
TIME
FUSION OF CARBONATE
START POWER GENERATION
FUEL FEED FROM REFORMER DECREASES
LOAD UP

FIG. 3

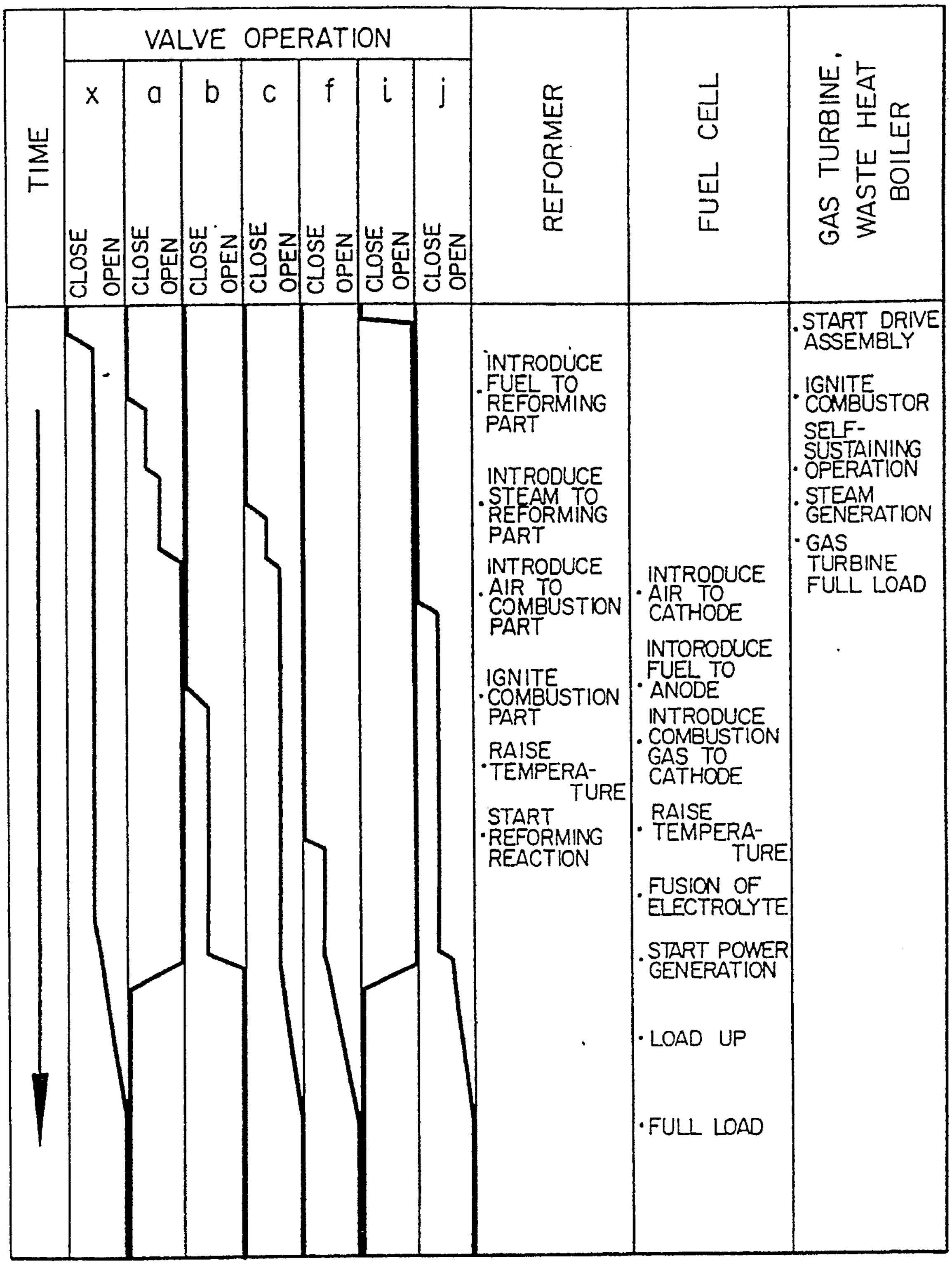
TIME
VALVE OPERATION
x
a
b
c
f
i
j
CLOSE
OPEN
REFORMER
FUEL CELL
GAS TURBINE, WASTE HEAT BOILER
• INTRODUCE FUEL TO REFORMING PART
• INTRODUCE STEAM TO REFORMING PART
• INTRODUCE AIR TO COMBUSTION PART
• IGNITE COMBUSTION PART
• RAISE TEMPERA-TURE
• START REFORMING REACTION
• INTRODUCE AIR TO CATHODE
• INTORODUCE FUEL TO ANODE
• INTRODUCE COMBUSTION GAS TO CATHODE
• RAISE TEMPERA-TURE
• FUSION OF ELECTROLYTE
• START POWER GENERATION
• LOAD UP
• FULL LOAD
• START DRIVE ASSEMBLY
• IGNITE COMBUSTOR
• SELF-SUSTAINING OPERATION
• STEAM GENERATION
• GAS TURBINE FULL LOAD